(19) Europäisches Patentamt

European Patent Office

Office européen des brevets

(11) **EP 2 890 726 B1**

(12) **EUROPEAN PATENT SPECIFICATION**

(45) Date of publication and mention
of the grant of the patent:
**24.03.2021 Bulletin 2021/12**

(21) Application number: **13832458.7**

(22) Date of filing: **22.08.2013**

(51) Int Cl.:
*C08G 18/32* (2006.01)    *C08G 18/28* (2006.01)
*C08G 18/62* (2006.01)    *C08J 9/04* (2006.01)
*C08F 2/38* (2006.01)    *C08F 283/06* (2006.01)
*C08G 18/63* (2006.01)

(86) International application number:
**PCT/US2013/056125**

(87) International publication number:
**WO 2014/035782 (06.03.2014 Gazette 2014/10)**

(54) **POLYMER POLYOLS HAVING IMPROVED QUALITY**

POLYMERPOLYOLE MIT VERBESSERTER QUALITÄT

POLYOLS DE POLYMÈRES AYANT UNE QUALITÉ AMÉLIORÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.08.2012 US 201213598832**

(43) Date of publication of application:
**08.07.2015 Bulletin 2015/28**

(73) Proprietor: **Covestro LLC
Pittsburgh, PA 15205 (US)**

(72) Inventors:
• **ADKINS, Rick L.
Cannonsburg, PA 15317 (US)**
• **CHAUK, Shriniwas
Sewickley, PA 15143 (US)**
• **CHARRON, James R.
Pittsburgh, PA 15243 (US)**

(74) Representative: **Levpat
c/o Covestro AG
Gebäude 4825
51365 Leverkusen (DE)**

(56) References cited:
**EP-A2- 0 410 361       US-A- 4 111 865
US-A1- 2006 025 491    US-A1- 2006 025 491
US-A1- 2007 060 690    US-A1- 2008 097 025
US-A1- 2009 163 613**

**Description**

## BACKGROUND OF THE INVENTION

This invention relates to high quality polymer polyols and to a process for preparing high quality polymer polyols. The present invention also relates to polyurethane foams prepared from these polymer polyols and to a process for preparing these polyurethane foams.

Polymer polyol compositions are commercial products that have found use in a variety of applications primarily as constituents in the production of polyurethanes. Polyurethanes are suitable for the production of coatings, adhesives, sealants, elastomers, and flexible, semi-flexible and rigid foams. The primary function of polymer polyols is to enhance the hardness or stiffness of the polyurethane and, in particular, to enhance the load bearing or energy adsorbing capacity of polyurethane foams. End-use applications of polyurethane foams include, for example, mattresses, furniture, carpet pad; packaging and energy management, thermal insulation, and automotive seating, trim, headliners, sound insulation, crash pads, etc.

The basic patents relating to such polymer polyol compositions are Stamberger, U.S. Patent Re. 28,715 (reissue of U.S. Patent 3,383,351) and U.S. Patent Re. 29,118 (reissue of U.S. Patent 3,304,273). As described therein, a stable dispersion of polymer particles in a polyol can be produced by polymerizing one or more ethylenically unsaturated monomer dissolved or dispersed in a polyol in the presence of a free radical catalyst.

Initially, the primary polymer polyol compositions accepted commercially used acrylonitrile in its manufacture. Many of these compositions possessed undesirably high viscosities for certain applications. More recently, acrylonitrile-styrene monomer mixtures have been used commercially to make the polymer component of polymer polyols. The expanding demand for polymer polyols has highlighted several product needs and this has spawned additional advances in technology.

Polymer polyols derived from such high styrene monomer mixtures appear incapable of satisfying ever-increasing market needs, which include rigorous stability, filterability and low-viscosity requirements, and increased load-bearing characteristics in polyurethane foams. It is known that polyurethane foams with increased load-bearing characteristics can be obtained by increasing the polymer or solid contents and/or by increasing the functionality and hydroxyl number of the polyol. Thus, polymer polyols having high solids contents, i.e. 30 to 60 weight percent or higher, are desirable. However, an increase in the solids contents of polymer polyols is, generally, at the expense of the other properties (i.e. filterability, stability and viscosity) of the polymer polyol. It is desirable that polymer polyols have high solids contents, with relatively low viscosities, and good filterability.

Employment of high styrene monomer mixtures and high solid content polymer polyols, by prior practices, generally resulted in undesirably high viscosity polymer polyols. The viscosity of a polymer polyol should be sufficiently low for ease of handling during its manufacture. In addition, the viscosity should facilitate transport, handling and, ultimately, adequate processability, in the employed foam processing equipment. Because of increased use of sophisticated mixing systems, such as impingement systems, excessive viscosity of the polymer polyol is becoming a significant problem. The need for lower viscosity polymer polyols is apparent to satisfy these increased demands in the art.

As indicated, polymer polyol stability is a concern to makers of polyurethanes. At one time, seediness or filterability, a measure of stability of polymer polyols, was not a major issue in commercial practices.

However, advances in the state of the art of polyurethane production such as high pressure carbon dioxide injection have resulted in revisions in polymer polyol stability and filterability criteria.

With commercial developments in sophisticated, high-speed and large-volume equipment and systems for handling, mixing and reacting polyurethane-forming ingredients have evolved the need for highly stable and low viscosity polymer polyols. Polymer polyols have certain minimum requirements for satisfactory processing in such sophisticated foam equipment. Typically, the prime requirement is that the polymer polyols possess sufficiently small particles so that filters, pumps and the like do not become plugged or fouled in relatively short periods of time.

Though there have been advances in reduction in viscosity and increase in solids of polymer polyols, there remains a need for improvement in viscosity reduction and increase in solids content. Greater reductions in viscosity are needed to meet market demands and greater effective increases in solids content are also needed by the market. More importantly, there is a need for technology in polymer polyols that maximizes viscosity reduction while also providing a viable mechanism to higher solids content.

U.S. Patent 5,196,476 and U.S. Patent 5,268,418 disclose polymer polyols and preformed stabilizer systems for preparing these polymer polyols. These polymer polyols are described as having solids contents greater than 30% by weight up to 60 % by weight; lower viscosities; excellent product stability such that 100% passes through a 150-mesh screen; exceptionally high amounts of high solids content polymer polyols that pass through a 700-mesh screen; and improved polyurethanes prepared from these polymer polyol.

Higher solids polymer polyols are commonly requested in the polyol market. As the solids content of polymer polyols increases, polymer polyols are more susceptible to impurities. Impurities may be present in one or more reactants, as they may be formed as by-products during the production of the reactant.

In particular, it has been found that impurities in styrene monomer can affect the quality, and particularly, the filterability of polymer polyols. Styrene monomer is one of the most common ethylenically unsaturated compounds which is used to prepare polymer polyols. Typical impurities in styrene monomer include, for example, compounds which contain an aromatic ring such as benzene, ethyl benzene, benzaldehyde, phenylacetylene, xylenes and polystyrene. These impurities are typical by-products that occur during the process of producing styrene monomer. Most common are polystyrene and phenylacetylene.

Problems in polymer polyols can also arise due to the presence of divinylbenzene. Divinylbenzene is not typically considered an impurity in polymer polyols. Rather, divinylbenzene is a common additive/monomer often used as a crosslinker in the process of producing styrene-based polymers. However, in facilities that handle both materials, contamination of styrene monomer raw material by divinylbenzene can occur if care is not taken to properly clean common process equipment. We have found that relatively small amounts of divinylbenzene can have negative impact on PMPO properties.

Surprisingly, it has now been found that the good stability and filterability of a polymer polyol can be achieved at a very high solids level by controlling the amount of impurities and other compounds which contain at least one aromatic ring such that less than or equal to 1000 ppm of these impurities are present in the styrene monomer. As the amount of impurities present in the styrene monomer increase, the quality of the polymer polyol is negatively impacted.

## SUMMARY OF THE INVENTION

This invention relates to high quality polymer polyols. These polyols comprise the free-radical polymerization product of (A) one or more base polyols; (B) optionally one or more preformed stabilizers; and (C) one or more ethylenically unsaturated monomers, wherein at least one of said monomers is styrene which contains less or equal to than 1000 ppm of impurities, wherein said impurities contain at least one compound which is selected from the group consisting of polystyrene, phenylacetylene and divinylbenzene. in the presence of (D) at least one free-radical initiator; and, optionally, (E) one or more chain transfer agents.

In accordance with the present invention, it is preferred that the styrene monomer contains less than 1000 ppm, it is more preferred that the styrene monomer contains less than 750 ppm, and it is most preferred that the styrene monomer contains less than or equal to 400 ppm of impurities.

The process of preparing these high quality polymer polyols comprises (I) free-radically polymerizing: (A) one or more base polyols; (B) optionally one or more preformed stabilizers; and (C) one or more ethylenically unsaturated monomers, wherein at least one of said monomers is styrene which contains less than or equal to 1000 ppm of impurities, wherein said impurities contain at least one compound which is selected from the group consisting of polystyrene, phenylacetylene and divinylbenzene. in the presence of (D) at least one free-radical initiator; and, optionally, (E) one or more chain transfer agents.

The present invention also relates to polyurethane foams that are the reaction product of a polyisocyanate, with an isocyanate-reactive component that comprises the high quality polymer polyols herein, in the presence of a blowing agent, a catalyst, and a surfactant.

Finally, the invention also relates to a process for preparing a polyurethane foam. This process comprises reacting a polyisocyanate, with an isocyanate-reactive component that comprises the high quality polymer polyols herein, in the presence of a blowing agent, a catalyst, and a surfactant.

## DETAILED DESCRIPTION OF THE INVENTION

As used herein, the following terms shall have the following meanings.

The term pre-formed stabilizer is defined as an intermediate obtained by reacting a macromer containing reactive unsaturation (e.g. acrylate, methacrylate, maleate, etc.) with monomers (i.e. acrylonitrile, styrene, methyl methacrylate, etc.), optionally in a diluent or a solvent (i.e. methanol, isopropanol, toluene, ethylbenzene, polyether polyols, etc.) to give a co-polymer (dispersion having e.g. a low solids content (e.g. <25%), or soluble grafts, etc.).

The term "monomer" means the simple unpolymerized form of chemical compound having relatively low molecular weight, e.g., acrylonitrile, styrene, methyl methacrylate, and the like.

The phrase "free radically polymerizable ethylenically unsaturated monomer" means a monomer containing ethylenic unsaturation (>C = C<, i.e. two double bonded carbon atoms) that is capable of undergoing free radically induced addition polymerization reactions.

The term "stability" means the ability of a material to maintain a stable form such as the ability to stay in solution or in suspension.

The phrase "polymer polyol" refers to such compositions which are produced by polymerizing one or more ethylenically unsaturated monomers dissolved or dispersed in a polyol in the presence of a free radical catalyst to form a stable dispersion of polymer particles in the polyol. These polymer polyols have the valuable property of imparting to, for example, polyurethane foams and elastomers produced therefrom, higher load-bearing properties than are provided by the corresponding unmodified polyols.

As used herein "viscosity" is in centistokes (cSt) measured at 25°C on a Cannon Fenske viscometer.

As used herein, the term "high quality" with regard to the polymer polyols means polymer polyol that passes the 150-mesh filtration test with low polymer residue (typically < 5ppm) and passes the 700-mesh filtration test in less than 600 seconds.

Suitable polyols to be used as the base polyols in the present invention include, for example, polyether polyols. Suitable polyether polyols include those having a functionality of at least 2. The functionality of suitable polyether polyols is typically less than or equal to 8, preferably less than or equal to 7, more preferably less than or equal to 6, and most preferably less than or equal to 5. The suitable polyether polyols may also have functionalities ranging between any combination of these upper and lower values, inclusive. The OH numbers of suitable polyether polyols is at least 10, preferably at least 15, more preferably at least 15, and most preferably at least 20. Polyether polyols typically also have OH numbers of less than or equal to 1000, preferably less than or equal to 500, more preferably less than or equal to 200, and most preferably less than or equal to 75. The suitable polyether polyols may also have OH numbers ranging between any combination of these upper and lower values, inclusive. The (number average) molecular weights of suitable polyether polyols is typically at least 100, preferably at least 225, more preferably at least 560, and most preferably at least 1,500. Polyether polyols typically have (number average) molecular weights of less than or equal to 45,000, preferably less than or equal to 26,200, more preferably less than or equal to 22,500, and most preferably less than or equal to 14,000. The suitable base polyether polyols may also have (number average) molecular weights ranging between any combination of these upper and lower values, inclusive. The polyether polyols used as the base polyol may optionally have low levels of unsaturation. When low unsaturation polyols are used as the base polyol, the unsaturation level of the base polyols is typically at least 0.001 meq/g, preferably at least 0.001, and most preferably at least 0.002. Suitable base polyether polyols also typically have unsaturation levels of less than or equal to 0.1, preferably less than or equal to 0.09 and most preferably less than or equal to 0.08. The suitable base polyether polyols may also have an unsaturation level ranging between any combination of these upper and lower values, inclusive.

These polyether polyols may also have functionalities ranging from 2 to 8, preferably from 2 to 7, more preferably 2 to 6, and most preferably from 2 to 5; OH numbers ranging from 10 to 1000, preferably from 15 to 500, more preferably from 15 to 200, and most preferably from 20 to 75; (number average) molecular weights ranging from 100 to 45,000, preferably 225 to 26,200, more preferably 560 to 22,500, and most preferably 1,500 to 14,000. In addition, the polyether polyols may optionally have levels of unsaturation ranging from 0.001 to 0.1, preferably from 0.001 to 0.09, and most preferably from 0.002 to 0.08meq/gram.

As used herein, the hydroxyl number is defined as the number of milligrams of potassium hydroxide required for the complete hydrolysis of the fully phthalylated derivative prepared from 1 gram of polyol. The hydroxyl number can also be defined by the equation:

$$OH = (56.1 \times 1000 \times f) / mol.\ wt.$$

wherein:

OH: represents the hydroxyl number of the polyol,
$f$: represents the functionality of the polyol, i.e. the average number of hydroxyl groups per molecule of polyol, and
mol. wt. represents the molecular weight of the polyol.

Examples of such compounds include polyoxyethylene glycols, triols, tetrols and higher functionality polyols, polyoxypropylene glycols, triols, tetrols and higher functionality polyols, mixtures thereof, etc. When mixtures as used, the ethylene oxide and propylene oxide may be added simultaneously or sequentially to provide internal blocks, terminal blocks or random distribution of the oxyethylene groups and/or oxypropylene groups in the polyether polyol. Suitable starters or initiators for these compounds include, for example, ethylene glycol, propylene glycol, diethylene glycol, dipropylene glycol, tripropylene glycol, trimethyolpropane, glycerol, pentaerythritol, sorbitol, sucrose, ethylenediamine, toluene diamine, etc. By alkoxylation of the starter, a suitable polyether polyol for the base polyol component can be formed.

Other suitable polyols for the base polyol of the present invention include alkylene oxide adducts of non-reducing sugars and sugar derivatives, alkylene oxide adducts of phosphorus and polyphosphorus acids, alkylene oxide adducts of polyphenols, polyols prepared from natural oils such as, for example, castor oil, etc., and alkylene oxide adducts of polyhydroxyalkanes other than those described above.

Illustrative alkylene oxide adducts of polyhydroxyalkanes include, for example, alkylene oxide adducts of 1,3-dihydroxypropane, 1,3-dihydroxy-butane, 1,4-dihydroxybutane,1,4-, 1,5- and 1,6-dihydroxyhexane, 1,2-, 1,3-, 1,4- 1,6- and 1,8-dihydroxyoctant, 1,10-dihydroxydecane, glycerol, 1,2,4-tirhydroxybutane, 1,2,6-trihydroxyhexane, 1,1,1-trimethyl-olethane, 1,1,1-trimethylolpropane, pentaerythritol, caprolactone, polycaprolactone, xylitol, arabitol, sorbitol, mannitol, and the like.

Other polyols which can be employed include the alkylene oxide adducts of non-reducing sugars, wherein the alkoxides have from 2 to 4 carbon atoms. Non-reducing sugars and sugar derivatives include sucrose, alkyl glycosides such as methyl glycoside, ethyl glucoside, etc. glycol glucosides such as ethylene glycol glycoside, propylene glycol glucoside, glycerol glucoside, 1,2,6-hexanetriol glucoside, etc. as well as alkylene oxide adducts of the alkyl glycosides as disclosed in U.S. Patent 3,073,788.

Other suitable polyols include the polyphenols and preferably the alkylene oxide adducts thereof wherein the alkylene oxides have from 2 to 4 carbon atoms. Among the polyphenols which are suitable include, for example bisphenol A, bisphenol F, condensation products of phenol and formaldehyde, the novolac resins, condensation products of various phenolic compounds and acrolein, including the 1,1,3-tris(hydroxyphenyl)propanes, condensation products of various phenolic compounds and glyoxal, glutaraldehyde, other dialdehydes, including the 1,1,2,2-tetrakis (hydroxyphenol)ethanes, etc.

The alkylene oxide adducts of phosphorus and polyphosphorus acid are also useful polyols, These include ethylene oxide, 1,2-epoxypropane, the epoxybutanes, 3-chloro-1,2-epoxypropane, etc. as preferred alkylene oxides. Phosphoric acid, phosphorus acid, the polyphosphoric acids such as, tripolyphosphoric acid, the polymetaphosphoric acids, etc. are desirable for use herein.

Suitable base polyols also include those low unsaturation polyols as described in, for example, U.S. Patents 3,278,457, 6,008,263, and 6,066,683.

It should also be appreciated that blends or mixtures of various useful polyols may be used if desired. With polyols other than the preferred type, useful monomer contents and types of monomers may vary somewhat. Similarly, it may be desirable or even necessary to modify the stabilizer of this invention when such other polyols are used. This can be accomplished by following the criteria discussed hereinafter in connection with the stabilizers used for the preferred polyols.

Suitable preformed stabilizers for the present invention are high potency preformed stabilizers which are known in the art and include without limitation those described in the references discussed herein. Preferred preformed stabilizers include those discussed in, for example, U.S. Patents 4,148,840 (Shah), 5,196,476 (Simroth), 5,268,418 (Simroth), 5,364,906 (Critchfield) and 6,013,731 (Holeschovsky et al.

When PFS is utilized, the amount of preformed stabilizer (B) in the present invention is typically at least 0.25%, preferably at least 2%, more preferably at least 4% and most preferably at least 5% by weight, based on the total weight of the polymer polyol. It is also typical to use the high potency preformed stabilizer (B) in accordance in the present invention in amounts of 35% by weight or less, preferably of 32% by weight or less, more preferably of 27% by weight of less, and most preferably of 22% by weight or less, based on the total weight of the polymer polyol. The amount of high potency preformed stabilizer in the polymer polyols of the present invention may range from any combination of these upper and lower values, inclusive, e.g. from 0.25% to 35%, preferably from 2% to 32%, more preferably from 4% to 27% and most preferably from 5% to 22% by weight, based on the total weight of the polymer polyol.

Suitable compounds to be used as the ethylenically unsaturated monomers, i.e. component (C) the present invention include, for example, those ethylenically unsaturated monomers described above with respect to the preformed stabilizer. Suitable monomers include, for example, styrene monomer, acrylonitrile, methacrylate, methyl methacrylate, preferably acrylonitrile and styrene monomer, with styrene monomer being particularly preferred. Other monomers include, for example, aliphatic conjugated dienes such as butadiene and isoprene; monovinylidene aromatic monomers such as styrene monomer, $\alpha$-methyl-styrene, (t-butyl)styrene, chlorostyrene, cyanostyrene and bromostyrene; $\alpha,\beta$-ethylenically unsaturated carboxylic acids and esters thereof such as acrylic acid, methacrylic acid, methyl methacrylate, ethyl acrylate, 2-hydroxyethyl acrylate, butyl acrylate, itaconic acid, maleic anhydride and the like; $\alpha,\beta$-ethylenically unsaturated nitriles and amides such as acrylonitrile, methacrylonitrile, acrylamide, methacrylamide, N,N-dimethyl acrylamide, N-(dimethylaminomethyl)-acrylamide and the like; vinyl esters such as vinyl acetate; vinyl ethers, vinyl ketones, vinyl and vinylidene halides as well as a wide variety of other ethylenically unsaturated materials which are copolymerizable with the aforementioned monomeric adduct or reactive monomer. It is understood that mixtures of two or more of the aforementioned monomers are also suitable employed in making the pre-formed stabilizer. Of the above monomers, the monovinylidene aromatic monomers, particularly styrene, and the ethylenically unsaturated nitriles, particularly acrylonitrile are preferred. In accordance with this aspect of the present invention, it is preferred that these ethylenically unsaturated monomers include styrene monomer and its derivatives, acrylonitrile, methyl acrylate, methyl methacrylate, vinylidene chloride, with styrene monomer and acrylonitrile being particularly preferred monomers.

In the preferred embodiment, the styrene monomer utilized in forming the polymer polyols contains $\leq$ 1000 ppm of impurities, said impurities mainly comprising compounds such as benzene, ethyl benzene, benzaldehyde, phenylacetylene, xylenes and polystyrene. These impurities are typical by-products that occur during the process of producing styrene monomer and/or during storage of styrene monomer. Most common are polystyrene and phenylacetylene. Polystyrene impurities in the styrene monomer result in polymer polyols that are clearly stressed. Thus, it is particularly preferred that when polystyrene impurities are present in the styrene monomer, the amount of polystyrene is 10 ppm or less, based on the total weight of the polymer polyol produced. In addition, it is important to eliminate/prevent contamination of styrene monomer by styrene-type contaminants such as divinylbenzene. In facilities that handle both styrene monomer and divinylbenzene, contamination of styrene monomer raw material by divinylbenzene can occur if care is not taken to properly clean common process equipment.

It is preferred that styrene monomer and acrylonitrile are used in sufficient amounts such that the weight ratio of styrene monomer to acrylonitrile (S:AN) is from 100:0 to 20:80, preferably from 80:20 to 30:70, more preferably from 75:25 to 40:60, and most preferably from 75:25 to 50:50. A particularly preferred weight ratio of styrene monomer to acrylonitrile is from 65:35 to 50:50. These ratios are suitable for polymer polyols and the processes of preparing them.

Overall, the solids content present in the polymer polyols of the present invention is greater than 20% by weight, preferably at least 30%, and most preferably at least 40% by weight, based on the total weight of the polymer polyol. The solids content present in the polymer polyols is 75% by weight or less, preferably 70% by weight or less, more preferably 65% by weight or less, and most preferably 60% by weight or less, based on the total weight of the polymer polyol. The polymer polyols of the present invention typically has a solids content ranging between any combination of these upper and lower values, inclusive, e.g. from 20% to 75% by weight, preferably from 30% to 70% by weight, more preferably from 30% to 65% by weight, and most preferably from 40% to 65% by weight, based on the total weight of the polymer polyol.

Suitable free-radical polymerization initiators to be used as component (D) in the present invention include initiators such as, for example, peroxides including both alkyl and aryl hydroperoxides, persulfates, perborates, percarbonates, azo compounds, etc. Some specific examples include catalysts such as hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxy pivalate, t-amyl peroxy pivalate, t-butyl peroxy-2-ethyl hexanoate, lauroyl peroxide, cumene hydroperoxide, t-butyl hydroperoxide, azobis(isobutyronitrile), i.e. AIBN, 2,2'-azo bis-(2-methylbutyronitrile), i.e. AMBN, etc.

Useful initiators also include, for example, those catalysts having a satisfactory half-life within the temperature ranges used in forming the polymer polyol. Typically, the half-life should be 25% or less of the residence time in the reactor at any given time. Preferred initiators for this portion of the invention include acyl peroxides such as didecanoyl peroxide and dilauroyl peroxide, alkyl peroxides such as t-butyl peroxy-2-ethylhexanoate, t-amyl peroxy-2-ethylhexanoate, t-butyl peroxy pivalate, t-amyl peroxy pivalate, di-(2-ethylhexyl)peroxydicarbonate, , di-n-propyl peroxydicarbonate, di-sec-butyl peroxydicarbonate, 3-hydroxy-1,1-dimethylbutyl peroxyneodecanoate, $\alpha$-cumyl peroxyneodecanoate, 3-hydroxy-1,1-dimethylbutyl peroxyneoheptanoate, , $\alpha$-cumyl peroxyneoheptanoate, , t-amyl peroxyneodecanoate, 2,5-dimethyl-2,5-di-(2-ethylhexanoylperoxy)hexane, diisononanoyl peroxide, didodecanoyl peroxide, dioctanoyl peroxide, succinic acid peroxide, t-amyl peroctoate, t-butyl perneodecanoate, t-butylperbenzoate and 1,1-dimethyl-3-hydroxybutyl peroxy-2-ethylhexanoate, dibenzoyl peroxide, 1,1,3,3-tetramethylbutyl peroxypivalate, di-(3,5,5-trimethylhexanoyl) peroxide, 1,1,3,3-tetramethylbutyl peroxy-2-ethylhexanoate, and azo catalysts such as azobis(isobutyro-nitrile), 2,2'-azo bis-(2-methoxylbutyronitrile), and mixtures thereof. Most preferred are the acyl and peroxyester peroxides described above and the azo catalysts.

The quantity of free-radical initiator used herein is not critical and can be varied within wide limits. In general, the amount of initiator is preferably 0.05 to 2.0% by weight, more preferably 0.10 to 1.5% by weight, and most preferably 0.15 to 1.0% by weight, based on the total feed of the components. Increases in catalyst concentration result in increases in monomer conversion up to a certain point, but past this, further increases do not result in substantial increases in conversion. When a peroxide initiator is used, it is preferred that the quantity be limited to that which results in polymer polyols having good filterability without undesirable increases in the viscosity.

Suitable chain transfer agents for use as component (E) in the present invention include, for example, known to be useful in polymer polyols and the processes of preparing polyols such as those described in, for example, U.S. Patents 3,953,393, 4,119,586, 4,463,107, 5,324,774, 5,814,699 and 6,624,209. Some examples of suitable compounds to be used as chain transfer agents include mercaptans (preferably alkyl mercaptans), alcohols, halogenated hydrocarbons (alkyl halides), ketones, enol-ethers and alkyl-substituted tertiary amines. Chain transfer agents are also commonly referred to as reaction moderators and/or as polymer control agents. These are known to control the molecular weight of the copolymerizate.

Suitable chain transfer agents include, for example, mercaptans including benzylmercaptan as well as alkyl mercaptans such as, for example, dodecylmercaptan, butylmercaptan, octylmercaptan, laurylmercaptan, cyclohexylmercaptan, etc., alkyl-substituted tertiary amines include compounds such as, for example, triethylamine, tripropylamine, tributylamine, N,N-diethylethanolamine, N-methylmorpholine, N-ethylmorpholine, N,N-diethylpiperazine, etc., alcohols include, for example, isopropanol, ethanol, methanol, tert-butanol, allyl-alcohol, etc., enol-ethers include, for example, (cyclohex-3-enylidenemethoxymethyl)-benzene, etc., halogenated hydrocarbons including, for example, carbon tetrachloride, carbon tetrabromide, chloroform, methylene chloride, etc. Other known chain transfer agents include compounds such as, for example, ethylbenzene and toluene. In accordance with the present invention, preferred chain transfer agents include isopropanol, ethanol, tert-butanol, toluene, ethylbenzene, triethylamine, dodecylmercaptan, octadecylmercaptan, etc.

Chain transfer agents are employed in amounts of from 0.1% by weight, preferably of at least 1%, more preferably at least 2% and most preferably at least 3% by weight. Chain transfer agents are also employed in amounts of less than or equal to 30% by weight, preferably less than or equal to 26%, more preferably less than or equal to 24% and most preferably less than or equal to 21% by weight. The weight basis for the chain transfer agent is the total weight of all the components charged to reactor. The chain transfer agent may be employed in any amount ranging between any combination of these lower and upper values, inclusive, e.g., from 0.1% to 30% by weight, preferably from 1% to 26% by weight, more preferably from 2% to 24% by weight and most preferably from 3% to 21% by weight.

The polymer polyols are preferably produced by utilizing a low monomer to polyol ratio which is maintained throughout the reaction mixture during the process. This is achieved by employing conditions that provide rapid conversion of monomer to polymer. In practice, a low monomer to polyol ratio is maintained, in the case of semi-batch and continuous operation, by control of the temperature and mixing conditions and, in the case of semibatch operation, also by slowly adding the monomers to the polyol.

The temperature range is not critical and may vary from 80°C to 150°or perhaps greater, the preferred range being from 90°C to 140°C, more preferably from 100°C to 135°C, and most pre ferably from 110 °C to 130°C. As has been noted herein, the catalyst a nd temperature should be selected so that the catalyst has a reasonable rate of decomposition with respect to the hold-up time in the reactor for a continuous flow reactor or the feed time for a semi-batch reactor.

The mixing conditions employed are those obtained using a back mixed reactor (e.g.-a stirred flask or stirred autoclave). The reactors of this type keep the reaction mixture relatively homogeneous and so prevent localized high monomer to polyol ratios such as occur in tubular reactors when such reactors are operated with all the monomer added to the beginning of the reactor.

The polymer polyols of the present invention comprise dispersions in which the polymer particles (the same being either individual particles or agglomerates of individual particles) are relatively small in size and, in the preferred embodiment, have a weight average size less than ten microns. However, when high contents of styrene are used, the particles will tend to be larger; but the resulting polymer polyols are highly useful, particularly where the end use application requires as little scorch as possible.

In accordance with the present invention, all of the stable, ultra-high solids product (viz. 100%) will pass through the filter employed in the 150 mesh filtration hindrance (filterability) test with low polymer residue (typically < 5 ppm), and an exceptionally high amount of the product will pass through a 700 mesh screen within 600 seconds. It is preferred that at least 99% pass through a 700 mesh screen, and more preferred that at least 100% pass through a 700 mesh screen. In accordance with the present invention, 100% of the product should pass through the 700 mesh screen within 600 seconds. The 150 mesh filtration and 700 mesh filtration tests are described in U.S. Patent 5,196,476.

This insures that the polymer polyol products can be successfully processed in all types of the relatively sophisticated machine systems now in use for large volume production of polyurethane products, including those employing impingement-type mixing which necessitate the use of filters that cannot tolerate any significant amount of relatively large particles. In addition, a significant amount of the polymer polyol passes the 700 mesh filtration hindrance test, as characterized more fully in the examples. It should be appreciated that the 700 mesh filtration hindrance test presents the most rigorous test of polymer polyol stability.

The following examples further illustrate details for the preparation and use of the compositions of this invention. The invention, which is set forth in the foregoing disclosure, is not to be limited either in spirit or scope by these examples. Those skilled in the art will readily understand that known variations of the conditions and processes of the following preparative procedures can be used to prepare these compositions. Unless otherwise noted, all temperatures are degrees Celsius and all parts and percentages are parts by weight and percentages by weight, respectively.

## EXAMPLES

The following components were used to prepare the polymer polyols described herein.

Base Polyol A: A propylene oxide adduct of glycerin containing 12% internal ethylene oxide with a hydroxyl number of 52 and a 520 mPa.s viscosity.

Base Polyol B: A propylene oxide adduct of glycerin containing 15% ethylene oxide cap with a hydroxyl number of 36 and a 825 mPa.s viscosity.

(continued)

| Initiator: | 2,2'-Azo-bis-isobutyronitrile (AIBN), a free-radical polymerization initiator commercially available under the name VAZO 64 from E. I. DuPont de Nemours and Co. |
| Styrene: | Styrene monomer containing less than 5 ppm of impurities |

This series of examples relates to the preparation of polymer polyols. The polymer polyols were prepared in a two-stage reaction system comprising a continuously-stirred tank reactor (CSTR) fitted with an impeller and 4 baffles (first-stage) and a plug-flow reactor (second stage). The residence time in each reactor was 60 minutes. The reactants were pumped continuously from feed tanks through an in-line static mixer and then through a feed tube into the reactor, which was well mixed. The feed consumption is reported in TABLE A. Where appropriate, preformed stabilizers of the type disclosed in TABLE 1 of U.S. Patent 7,179,882, were used to produce the polymer polyols. In particular, Preformed Stabilizer B (i.e. PFS B) of TABLE 1 in U.S. Patent 7,179,882 was used to prepare Polymer Polyol A (PMPO A) herein as set forth in TABLE A. The compositions of the polymer polyols prepared and tested are as described in TABLE A.

The temperature of the reaction mixture was controlled at 115 ± 5°C.

The product from the second-stage reactor overflowed continuously through a pressure regulator designed to control the pressure in each stage at 45 psig.

The polymer polyol then passed through a cooler and into a collection vessel. The crude product was vacuum stripped to remove volatiles. The wt. % total polymer in the product was calculated from the concentrations of monomers measured in the crude polymer polyol before stripping.

TABLE A. PMPO Composition Representative Examples

| Table B Example # | Example 3 | Example 9 |
|---|---|---|
| Polymer Polyol | A | B |
| Base Polyol (wt%) | A (45.9) | B (76.0) |
| PFS (wt%) | B[(1)] (5.85) | 0 |
| Initiator, wt% | 0.25 | 0.4 |
| Acrylonitrile, wt% | 16.8 | 12.1 |
| Styrene monomer, wt% | 31.2 | 11.5 |
| (1)PFS B corresponds to PFS B as described in TABLE 1 of U.S. Patent 7,179,882 | | |

The compositions described above in TABLE A are representative of the two different types of polymer polyols shown in TABLE B. One skilled in the art recognizes that different amounts of styrene/acrylonitrile solids in the polymer polyol formulations can be obtained simply by varying the amount of each component in TABLE A appropriately. Aside from the change in the solids content, all other aspects of the two polymer polyol formulations remained the same, including the ratio of styrene to acrylonitrile in the solids.

TABLE B below illustrates the effect of different impurities in various quantities on the quality of the final polymer polyols. Polymer polyol quality in TABLE B is determined by 150-mesh filtration polymer residue and 700-mesh filtration times. Examples with no added impurities are the control examples. In the examples in TABLE B, the polymer polyol is first filtered through a 150-mesh (100 micron) wire screen to monitor for solid residue (reported in ppm). The same material is then filtered through a 700-mesh (35 micron) wire screen and the time for the filtration recorded either in seconds (for passing filtration) or as a percentage for failing filtration. Failing filtration means that less than 100% of the polymer polyol passed through the 700-mesh screen in 600 seconds.

TABLE B:

| Example | PMPO Type | % Total Solids | Polystyrene[1] (ppm) | Phenylacetylene[1] (ppm) | Divinylbenzene[1] (ppm) | 150-Mesh Polymer Residue (ppm) | 700-Mesh Filtration (seconds) |
|---|---|---|---|---|---|---|---|
| Example 1 | A | 48.5% | 0 | 0 | 0 | 1 | 200 |
| Example 2 | A | 48.5% | 50 | 0 | 0 | 18 | 510 |
| Example 3 | A | 49.9% | 0 | 0 | 0 | 2 | 204 |
| Example 4 | A | 50.2% | 50 | 0 | 0 | 3 | 34%[2] |
| Example 5 | A | 53.0% | 0 | 0 | 0 | 2 | 280 |
| Example 6 | A | 53.2% | 0 | 200 | 0 | 10 | 300 |
| Example 7 | A | 52.8% | 0 | 0 | 200 | 16 | 374 |
| Example 8 | A | 53.0% | 0 | 200 | 200 | 107 | 317 |
| Example 9 | B | 22.2% | 0 | 0 | 0 | 0 | 228 |
| Example 10 | B | 22.7% | 100 | 0 | 0 | 1 | 95%[2] |
| (1) concentration of impurity that was added to the styrene monomer prior to forming the polymer polyol <br> (2) % of polymer polyol that filtered in 600 seconds | | | | | | | |

Although the invention has been described in detail in the foregoing for the purpose of illustration, it is to be understood that such detail is solely for that purpose and that variations can be made therein by those skilled in the art without departing of the invention except as it may be limited by the claims.

**Claims**

1. A polymer polyol comprising the free-radical polymerization product of:

    (A) one or more base polyols;
    (B) optionally, one or more preformed stabilizers;
    with
    (C) one or more ethylenically unsaturated monomers, wherein at least one of said monomers is styrene which contains less than or equal to 1000 ppm of impurities, wherein said impurities contain at least one compound which is selected from the group consisting of polystyrene, phenylacetylene and divinylbenzene; in the presence of
    (D) at least one free radial polymerization catalyst;
    and, optionally,
    (E) one or more chain transfer agents.

2. The polymer polyol of Claim 1, wherein said styrene monomer contains less than 750 ppm of impurities.

3. The polymer polyol of Claim 1, wherein said styrene monomer contains less than or equal to 400 ppm of impurities.

4. The polymer polyol of Claim 1, wherein (C) said one or more ethylenically unsaturated monomers comprises a mixture of styrene monomer and acrylonitrile.

5. The polymer polyol of Claim 1, which comprises (B) one or more preformed stabilizers which is a high potency preformed stabilizer, and said stabilizer is present in an amount of at least 0.25% by weight, based on the total weight of the polymer polyol.

6. The polymer polyol of Claim 1, wherein said free radical polymerization catalyst is selected from the group consisting of peroxides, persulfates, perborates, percarbonates, azo compounds and mixtures thereof.

7. The polymer polyol of Claim 1, wherein the solids content ranges from greater than 20% by weight up to 75% by weight, based on the total weight of the polymer polyol.

8. A process for the preparation of a polymer polyol comprising:

    (I) free-radically polymerizing

    (A) one or more base polyols;
    (B) optionally, one or more preformed stabilizers;
    with
    (C) one or more ethylenically unsaturated monomers, wherein at least one of said monomers is styrene which contains less than or equal to 1000 ppm of impurities, wherein said impurities contain at least one compound which is selected from the group consisting of polystyrene, phenylacetylene and divinylbenzene.; in the presence of
    (D) at least one free radial polymerization catalyst;
    and, optionally,
    one or more chain transfer agents.

9. The process of Claim 8, wherein said styrene monomer contains less than 750 ppm of impurities.

10. The process of Claim 8, wherein said styrene monomer contains less than or equal to 400 ppm of impurities.

11. The process of Claim 8, wherein (C) said one or more ethylenically unsaturated monomers comprises a mixture of styrene monomer and acrylonitrile.

12. The process of Claim 8, which comprises (B) one or more preformed stabilizers which is a high potency preformed stabilizer, and said stabilizer is present in an amount of at least 0.25% by weight, based on the total weight of the polymer polyol.

13. The process of Claim 8, wherein said free radical polymerization catalyst is selected from the group consisting of peroxides, persulfates, perborates, percarbonates, azo compounds and mixtures thereof.

14. The process of Claim 8, wherein the solids content ranges from greater than 20% by weight up to 75% by weight, based on the total weight of the polymer polyol.

15. A process for preparing a polyurethane foam, comprising reacting

> (1) a polyisocyanate
> with
> (2) an isocyanate-reactive component comprising the polymer
> polyol of Claim 1,
> in the presence of
> (3) at least one catalyst,
> and
> (4) at least one blowing agent.

16. A polyurethane foam comprising the reaction product of

> (1) a polyisocyanate,
> with
> (2) an isocyanate-reactive component comprising the polymer
> polyol of Claim 1,
> in the presence of
> (3) at least one catalyst,
> and
> (4) at least one blowing agent.

**Patentansprüche**

1. Polymerpolyol, umfassend das radikalische Polymerisationsprodukt von:

> (A) einem oder mehreren Basispolyolen;
> (B) gegebenenfalls einem oder mehreren vorgebildeten Stabilisatoren;
> mit
> (C) einem oder mehreren ethylenisch ungesättigten Monomeren, wobei es sich bei mindestens einem dieser Monomere um Styrol handelt, das 1000 ppm oder weniger an Verunreinigungen enthält, wobei die Verunreinigungen mindestens eine Verbindung enthalten, die aus der Gruppe bestehend aus Polystyrol, Phenylacetylen und Divinylbenzol ausgewählt sind;
> in Gegenwart von
> (D) mindestens einem radikalischen Polymerisationskatalysator; und gegebenenfalls
> (E) einem oder mehreren Kettenübertragungsmitteln.

2. Polymerpolyol nach Anspruch 1, wobei das Styrolmonomer weniger als 750 ppm an Verunreinigungen enthält.

3. Polymerpolyol nach Anspruch 1, wobei das Styrolmonomer 400 ppm oder weniger an Verunreinigungen enthält.

4. Polymerpolyol nach Anspruch 1, wobei (C) das eine oder die mehreren ethylenisch ungesättigten Monomere eine Mischung von Styrolmonomer und Acrylnitril umfassen.

5. Polymerpolyol nach Anspruch 1, das (B) einen oder mehrere vorgebildete Stabilisatoren umfasst, bei dem es sich um einen vorgebildeten Stabilisator mit hoher Wirksamkeit handelt und wobei der Stabilisator in einer Menge von mindestens 0,25 Gewichts-%, bezogen auf das Gesamtgewicht des Polymerpolyols, vorliegt.

**6.** Polymerpolyol nach Anspruch 1, wobei der radikalische Polymerisationskatalysator aus der Gruppe bestehend aus Peroxiden, Persulfaten, Perboraten, Percarbonaten, Azoverbindungen und Mischungen davon ausgewählt ist.

**7.** Polymerpolyol nach Anspruch 1, wobei der Feststoffgehalt mehr als 20 Gewichts-% bis zu 75 Gewichts-%, bezogen auf das Gesamtgewicht des Polymerpolyols, beträgt.

**8.** Verfahren zur Herstellung eines Polymerpolyols, umfassend:

(I) radikalische Polymerisation von

(A) einem oder mehreren Basispolyolen;
(B) gegebenenfalls einem oder mehreren vorgebildeten Stabilisatoren;
mit
(C) einem oder mehreren ethylenisch ungesättigten Monomeren, wobei es sich bei mindestens einem dieser Monomere um Styrol handelt, das 1000 ppm oder weniger an Verunreinigungen enthält, wobei die Verunreinigungen mindestens eine Verbindung enthalten, die aus der Gruppe bestehend aus Polystyrol, Phenylacetylen und Divinylbenzol ausgewählt sind;
in Gegenwart von
(D) mindestens einem radikalischen Polymerisationskatalysator;
und gegebenenfalls
einem oder mehreren Kettenübertragungsmitteln.

**9.** Verfahren nach Anspruch 8, wobei das Styrolmonomer weniger als 750 ppm an Verunreinigungen enthält.

**10.** Vefahren nach Anspruch 8, wobei das Styrolmonomer 400 ppm oder weniger an Verunreinigungen enthält.

**11.** Verfahren nach Anspruch 8, wobei (C) das eine oder die mehreren ethylenisch ungesättigten Monomere eine Mischung von Styrolmonomer und Acrylnitril umfassen.

**12.** Verfahren nach Anspruch 8, das (B) einen oder mehrere vorgebildete Stabilisatoren umfasst, bei dem es sich um einen vorgebildeten Stabilisator mit hoher Wirksamkeit handelt und wobei der Stabilisator in einer Menge von mindestens 0,25 Gewichts-%, bezogen auf das Gesamtgewicht des Polymerpolyols, vorliegt.

**13.** Verfahren nach Anspruch 8, wobei der radikalische Polymerisationskatalysator aus der Gruppe bestehend aus Peroxiden, Persulfaten, Perboraten, Percarbonaten, Azoverbindungen und Mischungen davon ausgewählt ist.

**14.** Verfahren nach Anspruch 8, wobei der Feststoffgehalt mehr als 20 Gewichts-% bis zu 75 Gewichts-%, bezogen auf das Gesamtgewicht des Polymerpolyols, beträgt.

**15.** Verfahren zur Herstellung eines Polyurethanschaumstoffs, umfassend das Umsetzen von

(1) einem Polyisocyanat
mit
(2) einer gegenüber Isocyanat reaktiven Komponente, die das Polymerpolyol nach Anspruch 1 umfasst,
in Gegenwart von
(3) mindestens einem Katalysator,
und
(4) mindestens einem Treibmittel.

**16.** Polyurethanschaumstoff, umfassend das Reaktionsprodukt von

(1) einem Polyisocyanat
mit
(2) einer gegenüber Isocyanat reaktiven Komponente, die das Polymerpolyol nach Anspruch 1 umfasst,
in Gegenwart von
(3) mindestens einem Katalysator,
und
(4) mindestens einem Treibmittel.

**Revendications**

1.  Polyol polymérique comprenant le produit de polymérisation par voie radicalaire libre de :

    (A) un ou plusieurs polyols de base ;
    (B) éventuellement, un ou plusieurs stabilisants préformés ;
    avec
    (C) un ou plusieurs monomères éthyléniquement insaturés, au moins l'un desdits monomères étant le styrène qui contient une quantité inférieure ou égale à 1 000 ppm d'impuretés, lesdites impuretés contenant au moins un composé qui est choisi dans le groupe constitué par un polystyrène, le phénylacétylène et un divinylbenzène ;
    en la présence
    (D) d'au moins un catalyseur de polymérisation par voie radicalaire libre ;
    et, éventuellement,
    (E) d'un ou plusieurs agents de transfert de chaînes.

2.  Polyol polymérique selon la revendication 1, ledit monomère de type styrène contenant moins de 750 ppm d'impuretés.

3.  Polyol polymérique selon la revendication 1, ledit monomère de type styrène contenant une quantité inférieure ou égale à 400 ppm d'impuretés.

4.  Polyol polymérique selon la revendication 1, (C) ledit ou lesdits monomères éthyléniquement insaturés comprenant un mélange d'un monomère de type styrène et d'acrylonitrile.

5.  Polyol polymérique selon la revendication 1, qui comprend (B) un ou plusieurs stabilisants préformés qui sont un stabilisant préformé à haut potentiel, et ledit stabilisant est présent en une quantité d'au moins 0,25 % en poids, sur la base du poids total du polyol polymérique.

6.  Polyol polymérique selon la revendication 1, ledit catalyseur de polymérisation par voie radicalaire libre étant choisi dans le groupe constitué par des peroxydes, des persulfates, des perborates, des percarbonates, des composés azo et des mélanges correspondants.

7.  Polyol polymérique selon la revendication 1, la teneur en solides se situant dans la plage de plus de 20 % en poids jusqu'à 75 % en poids, sur la base du poids total du polyol polymérique.

8.  Procédé pour la préparation d'un polyol polymérique comprenant :

    (I) la polymérisation par voie radicalaire libre

        (A) d'un ou plusieurs polyols de base ;
        (B) éventuellement, d'un ou plusieurs stabilisants préformés ;
        avec
        (C) un ou plusieurs monomères éthyléniquement insaturés, au moins l'un desdits monomères étant le styrène qui contient une quantité inférieure ou égale à 1 000 ppm d'impuretés, lesdites impuretés contenant au moins un composé qui est choisi dans le groupe constitué par un polystyrène, le phénylacétylène et un divinylbenzène ;
        en la présence
        (D) d'au moins un catalyseur de polymérisation par voie radicalaire libre ;
        et, éventuellement,
        d'au moins un agent de transfert de chaînes.

9.  Procédé selon la revendication 8, ledit monomère de type styrène contenant moins de 750 ppm d'impuretés.

10. Procédé selon la revendication 8, ledit monomère de type styrène contenant une quantité inférieure ou égale à 400 ppm d'impuretés.

11. Procédé selon la revendication 8, (C) ledit ou lesdits monomères éthyléniquement insaturés comprenant un mélange d'un monomère de type styrène et d'acrylonitrile.

**12.** Procédé selon la revendication 8, qui comprend (B) un ou plusieurs stabilisants préformés qui est un stabilisant préformé à haut potentiel, et ledit stabilisant est présent en une quantité d'au moins 0,25 % en poids, sur la base du poids total du polyol polymérique.

**13.** Procédé selon la revendication 8, ledit catalyseur de polymérisation par voie radicalaire libre étant choisi dans le groupe constitué par des peroxydes, des persulfates, des perborates, des percarbonates, des composés azo et des mélanges correspondants.

**14.** Procédé selon la revendication 8, la teneur en solides se situant dans la plage de plus de 20 % en poids jusqu'à 75 % en poids, sur la base du poids total du polyol polymérique.

**15.** Procédé pour la préparation d'une mousse de polyuréthane, comprenant la mise en réaction

(1) d'un polyisocyanate
avec
(2) un composant réactif envers un isocyanate comprenant le polyol polymérique selon la revendication 1,
en la présence
(3) d'au moins un catalyseur,
et
(4) d'au moins un agent de gonflement.

**16.** Mousse de polyuréthane comprenant le produit de réaction

(1) d'un polyisocyanate
avec
(2) un composant réactif envers un isocyanate comprenant le polyol polymérique selon la revendication 1,
en la présence
(3) d'au moins un catalyseur,
et
(4) d'au moins un agent de gonflement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US RE28715 E
- US 3383351 A
- US RE29118 E
- US 3304273 A
- US 5196476 A
- US 5268418 A
- US 3073788 A
- US 3278457 A
- US 6008263 A
- US 6066683 A
- US 4148840 A, Shah
- US 5364906 A, Critchfield
- US 6013731 A, Holeschovsky
- US 3953393 A
- US 4119586 A
- US 4463107 A
- US 5324774 A
- US 5814699 A
- US 6624209 B
- US 7179882 B